(19) **Europäisches Patentamt / European Patent Office / Office européen des brevets**

(11) **EP 4 056 866 A1**

(12) **EUROPEAN PATENT APPLICATION**
published in accordance with Art. 153(4) EPC

(43) Date of publication:
14.09.2022 Bulletin 2022/37

(21) Application number: 20884832.5

(22) Date of filing: 22.10.2020

(51) International Patent Classification (IPC):
$F16C\ 27/06$ (2006.01)    $F16H\ 25/20$ (2006.01)
$F16H\ 25/22$ (2006.01)    $F16H\ 25/24$ (2006.01)
$F16H\ 37/12$ (2006.01)    $B62D\ 5/04$ (2006.01)
$F16H\ 55/36$ (2006.01)    $F16H\ 55/48$ (2006.01)

(52) Cooperative Patent Classification (CPC):
B62D 5/04; F16C 27/06; F16H 25/20; F16H 25/22;
F16H 25/24; F16H 37/12; F16H 55/36; F16H 55/48

(86) International application number:
PCT/JP2020/039785

(87) International publication number:
WO 2021/090696 (14.05.2021 Gazette 2021/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.11.2019 JP 2019202770

(71) Applicant: NSK Ltd.
Tokyo 141-8560 (JP)

(72) Inventors:
• CHIHARA, Yuta
Fujisawa-shi, Kanagawa 251-8501 (JP)
• SAKODA, Hironari
Fujisawa-shi, Kanagawa 251-8501 (JP)
• MIWA, Takuya
Fujisawa-shi, Kanagawa 251-8501 (JP)

(74) Representative: SSM Sandmair
Patentanwälte Rechtsanwalt
Partnerschaft mbB
Joseph-Wild-Straße 20
81829 München (DE)

(54) **POWER TRANSMISSION DEVICE**

(57) A power transmission device includes: a housing; a ball screw device including a nut, a screw shaft, and a plurality of balls; a pulley device including a driving pulley configured to be driven by receiving power transmitted from a power source, a driven pulley fixed to the nut, and a belt wound around outer peripheral surfaces of the driving pulley and the driven pulley; a first bearing and a second bearing disposed between the housing and the nut in a center axis direction parallel with a center axis of the nut; and a preload applying member configured to apply preloads to the first bearing and the second bearing. The first bearing and the second bearing are respectively disposed on both sides of the driven pulley to be a face-to-face combination, and each of the first bearing and the second bearing includes an outer ring engaged with the housing. The outer ring is pressed toward the driven pulley by the preload applying member, and is separated from the driven pulley with a gap formed between the outer ring and the driven pulley.

FIG.4

**Description**

Field

The present disclosure relates to a power transmission device.

Background

As a type of an electric power steering device, exemplified is an electric power steering device of rack-assist type. An electric power steering device of rack-assist type according to Patent Literature 1 includes a power transmission device for transmitting power of an electric motor to a rack. The power transmission device according to Patent Literature 1 includes a ball screw device, a pulley device, and a double-row bearing. The ball screw device includes a screw shaft that is formed integrally with the rack, a nut supported by the double-row bearing, and a plurality of balls disposed between a first groove of the screw shaft and a second groove of the nut. The pulley device includes a driving pulley fixed to an output shaft of the electric motor as a power source, a driven pulley engaged with an outer circumference of the nut, and a belt wound around outer peripheral surfaces of the driving pulley and the driven pulley.

Citation List

Patent Literature

Patent Literature 1: Japanese Patent Application Laid-open No. 2018-70117

Summary

Technical Problem

The bearing according to Patent Literature 1 has a configuration of back-to-back combination in which a distance between working points is large, and has high rigidity against a moment load. That is, the moment load input to the ball screw device as a reaction is also large. The ball screw device is a component specialized in an axial load, so that it is not preferable that a large moment load is input thereto because a strange sound may be caused. Accordingly, there is a demand for reducing rigidity of the bearing against the moment load to reduce the moment load input to the ball screw device.
The present disclosure is made in view of the aforementioned problem, and provides a power transmission device that can reduce rigidity of a bearing against a moment load.

Solution to Problem

To achieve the above object, a power transmission device according to an embodiment of the present disclosure comprising: a housing; a ball screw device including a nut housed in the housing, a screw shaft passing through the nut, and a plurality of balls disposed between the nut and the screw shaft; a pulley device including a driving pulley configured to be driven by receiving power transmitted from a power source, a driven pulley fixed to the nut, and a belt wound around outer peripheral surfaces of the driving pulley and the driven pulley; a first bearing and a second bearing disposed between the housing and the nut in a center axis direction parallel with a center axis of the nut; and a preload applying member configured to apply preloads to the first bearing and the second bearing, wherein the first bearing and the second bearing are respectively disposed on both sides of the driven pulley to be a face-to-face combination, each of the first bearing and the second bearing includes an outer ring engaged with the housing, and the outer ring is pressed toward the driven pulley by the preload applying member, and is separated from the driven pulley with a gap between the outer ring and the driven pulley.
The first bearing and the second bearing have a configuration of face-to-face combination in which a distance between working points is small. That is, rigidity of the first bearing and the second bearing against a moment load is low. Thus, the moment load input to the ball screw device is reduced, and a strange sound is prevented from being caused. With the configuration described above, when the outer ring has a dimensional error in the center axis direction, the dimensional error enters a gap between the outer ring and the driven pulley, and the dimensional error is absorbed. Thus, the outer ring is not displaced in the center axis direction, and only a load caused by pressing force of the preload applying member acts on rolling elements. As a result, a predetermined preload amount is achieved, and bearing torque can be stabilized.
As a desirable embodiment of the power transmission device, a first intersection point at which an extension line at a contact angle of the first bearing intersects with the center axis of the nut agrees with, on the center axis of the nut, a second intersection point at which an extension line at a contact angle of the second bearing intersects with the center axis of the nut, and a virtual line orthogonal to the center axis of the nut and passing through a center in the center axis direction of the outer peripheral surface of the driven pulley passes through both of the first intersection point and the second intersection point. Accordingly, the first bearing and the second bearing substantially support the ball screw device at a point where the first intersection point agrees with the second intersection point. Thus, the rigidity against the moment load is low. Additionally, fulcrums of the first bearing and the second bearing agree with a point of application of tension of the belt, and the moment load is not generated in the nut.

As a desirable embodiment of the power transmission device, two inner ring raceway surfaces are formed on the outer peripheral surface of the nut, the inner ring raceway surfaces subjected to hardening treatment on which rolling elements roll. Accordingly, the inner ring is not required, and the power transmission device can be downsized in a radial direction. Even when the driven pulley presses the adjacent inner ring while receiving a load due to vibration that may cause the driven pulley to move in the center axis direction, the inner ring is not displaced in an axial direction. Accordingly, a pressing amount of the inner ring that presses the rolling elements is not increased, and increase in the bearing torque can be avoided.

As a desirable embodiment of the power transmission device, a groove part that is recessed radially inward is formed on the outer peripheral surface of the nut, the driven pulley is made of resin and integrated with the nut by insert molding, and part of the driven pulley enters the groove part. Due to this, a position of the driven pulley is hardly deviated in a circumferential direction with respect to the nut, and rotational motion can be securely transmitted to the nut. Additionally, the position of the driven pulley is hardly deviated in the center axis direction with respect to the nut. Due to this, the driven pulley does not move even when receiving a load from the belt that may cause the driven pulley to move in the center axis direction. Accordingly, the driven pulley is prevented from pressing the inner ring or the outer ring, and the preload amount applied to the bearing can be maintained at a predetermined amount.

As a desirable embodiment of the power transmission device, an elastic member is interposed between the outer peripheral surface of the outer ring and the housing. Vibration of the outer ring in the radial direction is absorbed by the elastic member, and what is called a rattling sound is prevented from being caused.

As a desirable embodiment of the power transmission device, a recessed part is formed on a side surface of the driven pulley opposed to an end face of the outer ring, an extending part extending toward the inside of the recessed part is formed on the outer ring, an end part of the extending part enters the recessed part, and a labyrinth structure is made by a minute gap between the end part of the extending part and the recessed part. Accordingly, abrasion powder of the driven pulley and the belt hardly enters the first bearing and the second bearing.

As a desirable embodiment of the power transmission device, comprising: a shielding member that is fixed to the outer ring, extends toward a side surface of the driven pulley, and closes a gap between the outer ring and the driven pulley, wherein a recessed part is formed on a side surface of the driven pulley opposed to an end face of the outer ring, an end part of the shielding member enters the recessed part, and a labyrinth structure is made by a minute gap between the end part of the shielding member and the recessed part. Accordingly, abrasion powder of the driven pulley and the belt hardly enters the first bearing and the second bearing.

As a desirable embodiment of the power transmission device, grease is filled in the recessed part. Accordingly, the abrasion powder is absorbed by the grease, so that the abrasion powder more hardly enters the first bearing and the second bearing.

As a desirable embodiment of the power transmission device, a first sealing member is disposed at an end part of the outer ring facing the preload applying member, the first sealing member being in slidably contact with the outer peripheral surface of the nut. Accordingly, foreign substances on the preload applying member side hardly enter the first bearing and the second bearing.

As a desirable embodiment of the power transmission device, the first sealing member comprises: a cored bar fixed to an end part of the outer ring; and an elastic body for inner circumference sealing supported by the cored bar, the cored bar includes a cylindrical outer circumference engagement part configured to engage with the outer peripheral surface of the outer ring, and a recessed part is formed on the outer peripheral surface of the outer ring, the recessed part being recessed radially inward and housing the outer circumference engagement part. Accordingly, the outer circumference engagement part is housed in the recessed part, and it is possible to prevent the outer circumference engagement part from abutting on the housing to hinder sliding movement of the outer ring.

As a desirable embodiment of the power transmission device, comprising: an elastic body for outer circumference sealing configured to close a space between the outer peripheral surface of the outer ring and an inner peripheral surface of the housing, wherein the elastic body for outer circumference sealing is fixed to an outer peripheral surface of the outer circumference engagement part and in slidably contact with the inner peripheral surface of the housing. The elastic body for outer circumference sealing can prevent grease from leaking out from between the housing and the outer ring, and a sliding property of the outer ring can be secured. Furthermore, vibration of the outer ring in the radial direction is absorbed by the elastic body for outer circumference sealing, and what is called a rattling sound is prevented from being caused. Additionally, when the cored bar is assembled with the outer ring, the elastic body for outer circumference sealing is also assembled therewith, so that man-hours for assembling work are reduced.

As a desirable embodiment of the power transmission device, comprising: a high load absorbing part interposed between the preload applying member and the outer ring to absorb a high load in the center axis direction, wherein a cross-sectional area of the preload applying member cut along the center axis direction is smaller than a cross-sectional area of the high load absorbing part, and the preload applying member and the high load absorbing part are supported by the cored bar. Accordingly, in a case of assembling the high load absorbing part with the preload applying member, the preload applying member is deformed to press the outer ring, and applies a preload to the bearing. On the other hand, in a case in which a high load acts on the ball screw device, the high load absorbing part absorbs the load. Accordingly, the preload applying member is prevented from being ruptured due to a high load acting thereon. Additionally, when the cored bar is assembled with the outer ring, the preload applying member and the high load absorbing part are also assembled with each other, so that man-hours for the assembling work are reduced.

As a desirable embodiment of the power transmission device, wherein a second sealing member being in slidably contact with the outer peripheral surface of the nut is disposed on an end part of an outer ring of the first bearing or the second bearing facing the driven pulley. Accordingly, abrasion powder of the driven pulley and the belt hardly enters the first bearing and the second bearing.

Advantageous Effects of Invention

In the power transmission device according to the present disclosure, rigidity of the bearing against the moment load is reduced, so that the moment load input to the ball screw device is reduced.

Brief Description of Drawings

FIG. 1 is a schematic diagram of an electric power steering device including a power transmission device according to a first embodiment.
FIG. 2 is a front view of a rack according to the first embodiment.
FIG. 3 is a cross-sectional view in a case of cutting the power transmission device according to the first embodiment at a plane including a screw shaft and an output shaft of an electric motor.
FIG. 4 is a cross-sectional view in a case of cutting the power transmission device according to the first embodiment at a plane including the screw shaft, the plane at an angle orthogonal to the cross-sectional view of FIG. 3.
FIG. 5 is a cross-sectional view for explaining extension lines at contact angles of a first bearing and a second bearing.
FIG. 6 is a cross-sectional view of a power transmission device according to a first modification.
FIG. 7 is a cross-sectional view of a power transmission device according to a second modification.
FIG. 8 is a cross-sectional view of a power transmission device according to a second embodiment.
FIG. 9 is a cross-sectional view of a power transmission device according to a third modification.
FIG. 10 is a perspective view of enlarging and obliquely viewing a part of a nut according to the third modification.
FIG. 11 is a cross-sectional view of a power transmission device according to a third embodiment.
FIG. 12 is a cross-sectional view of a power transmission device according to a fourth embodiment.
FIG. 13 is a cross-sectional view of a power transmission device according to a fifth embodiment.
FIG. 14 is a cross-sectional view of a power transmission device according to a sixth embodiment.
FIG. 15 is a cross-sectional view of a power transmission device according to a seventh embodiment.
FIG. 16 is a cross-sectional view of a power transmission device according to an eighth embodiment.
FIG. 17 is a cross-sectional view of a power transmission device according to a ninth embodiment.
FIG. 18 is a schematic diagram extracting only a preload applying member and a high load absorbing part from FIG. 17, which is viewed from a center axis direction. Description of Embodiments

The following describes the present disclosure in detail with reference to the drawings. The following modes for carrying out the invention (hereinafter referred to as embodiments) do not limit the present disclosure. Constituent elements in the following embodiments include a constituent element that is easily conceivable by those skilled in the art, substantially the same constituent element, and what is called an equivalent. Furthermore, constituent elements disclosed in the following embodiments can be appropriately combined with each other.

(First embodiment)

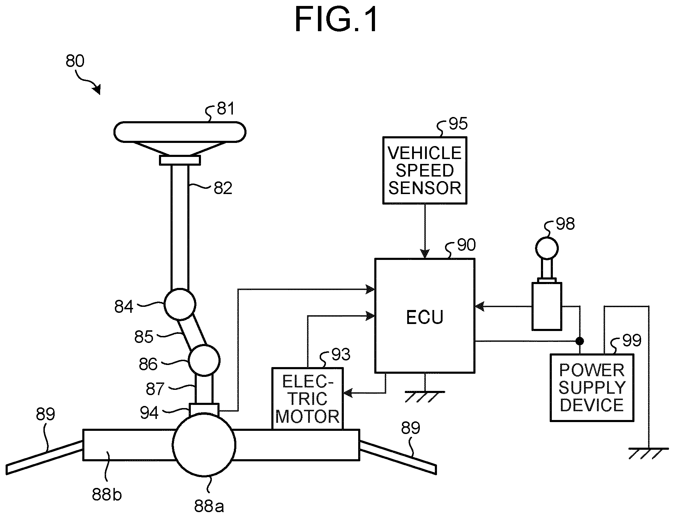

FIG. 1 is a schematic diagram of an electric power steering device including a ball screw device according to a first embodiment. As illustrated in FIG. 1, an electric power steering device 80 includes a steering wheel 81, a steering shaft 82, a universal joint 84, a lower shaft 85, a universal joint 86, a pinion shaft 87, a pinion 88a, and a rack 88b.

The steering wheel 81 is coupled to the steering shaft 82. One end of the steering shaft 82 is coupled to the steering wheel 81. The other end of the steering shaft 82 is coupled to the universal joint 84. One end of the lower shaft 85 is coupled to the steering shaft 82 via the universal joint 84. The other end of the lower shaft 85 is coupled to the pinion shaft 87 via the universal joint 86. The pinion shaft 87 is coupled to the pinion 88a. The pinion 88a engages with the rack 88b. When the pinion 88a rotates, the rack 88b moves in a vehicle width direction of a vehicle. The pinion 88a and the rack 88b convert rotational motion transmitted to the pinion shaft 87 into rectilinear motion. Tie rods 89 are coupled to both ends of the rack 88b. An angle of a wheel is changed when the rack 88b moves. Alternatively, an operation of the steering wheel 81 may be converted into an electric signal, and the angle of the wheel may be changed by the electric signal. That is, a steer-by-wire system may be applied to the electric power steering device 80.

The electric power steering device 80 also includes an electric motor 93, a torque sensor 94, and an electronic control unit (ECU) 90. The electric motor 93 is, for example, a brushless motor, but may be a motor including a brush (slider) and a commutator. The electric motor 93 is disposed in a housing 100 that is described later. The torque sensor 94 is, for example, attached to the pinion 88a. The torque sensor 94 outputs steering torque transmitted to the pinion 88a to the ECU 90 by controller area network (CAN) communication. A vehicle speed sensor 95 detects a traveling speed (vehicle speed) of a vehicle on which the electric power steering device 80 is mounted. The vehicle speed sensor 95 is provided to a vehicle body, and outputs the traveling speed (vehicle speed) to the ECU 90 by CAN communication. The electric motor 93, the torque sensor 94, and the vehicle speed sensor 95 are electrically connected to the ECU 90.

The ECU 90 controls an operation of the electric motor 93. The ECU 90 acquires signals from the torque sensor 94 and the vehicle speed sensor 95, respectively. In a state in which an ignition switch 98 is turned on, electric power is supplied to the ECU 90 from a power supply device 99 (for example, an on-board battery). The ECU 90 calculates an auxiliary steering command value based on the steering torque and the vehicle speed. The ECU 90 adjusts a power value supplied to the electric motor 93 based on the auxiliary steering command value. The ECU 90 acquires, from the electric motor 93, information on an induced voltage or information output from a resolver and the like disposed in the electric motor 93.

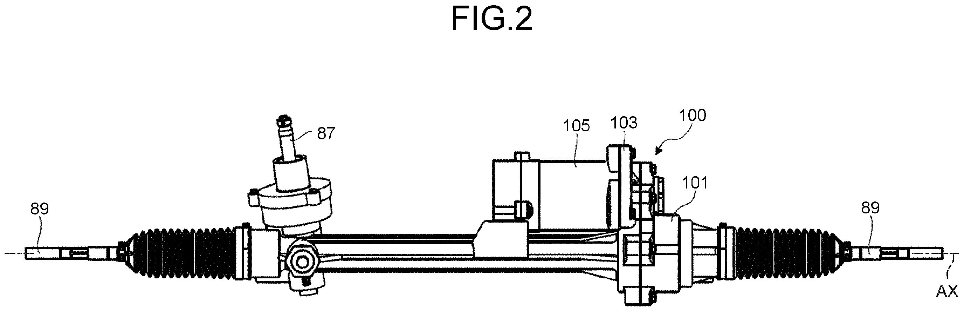

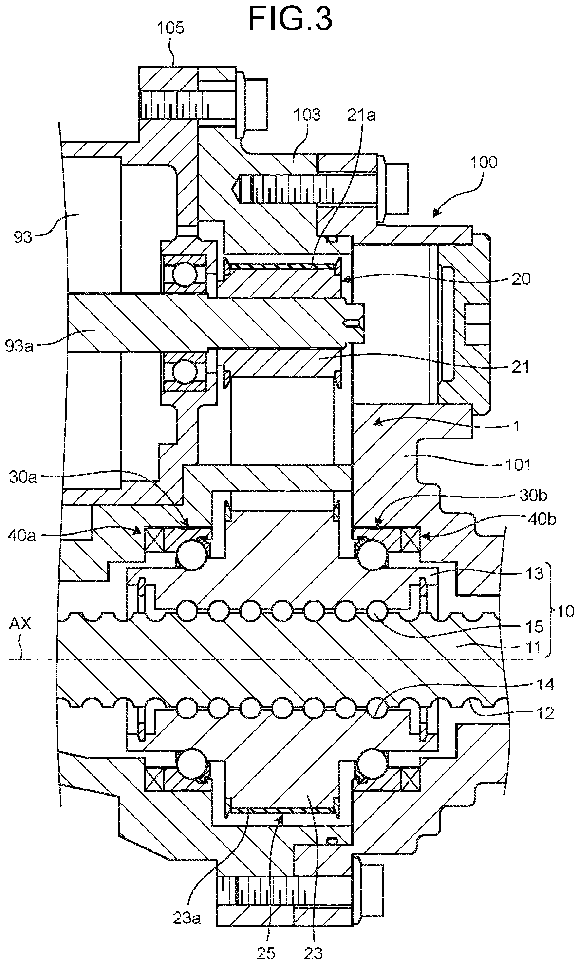

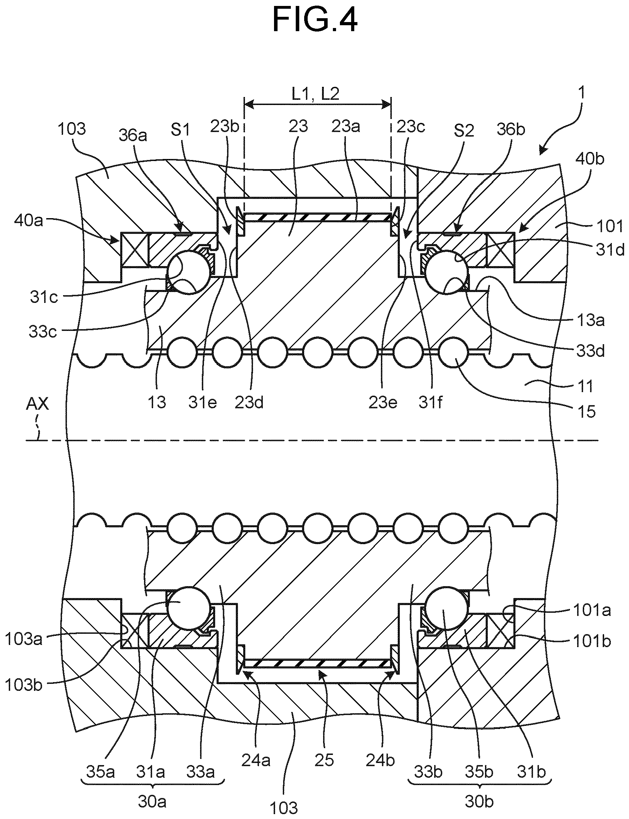

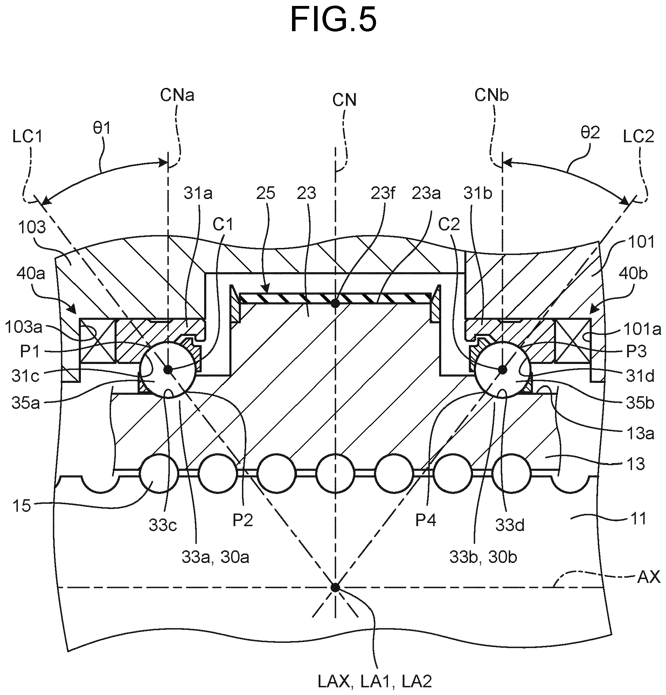

FIG. 2 is a front view of the rack according to the first embodiment. FIG. 3 is a cross-sectional view in a case of cutting the power transmission device according to the first embodiment at a plane including a screw shaft and an output shaft of the electric motor. FIG. 4 is a cross-sectional view in a case of cutting the power transmission device according to the first embodiment at a plane including the screw shaft, the plane at an angle orthogonal to the cross-sectional view of FIG. 3. FIG. 5 is a cross-sectional view for explaining extension lines at contact angles of a first bearing and a second bearing. As illustrated in FIG. 2, the housing 100 is a cylindrical component extending in the vehicle width direction. The housing 100 is made of a light metal such as an aluminum alloy or a magnesium alloy, for example. The housing 100 includes a first main body 101, a second main body 103, and a third main body 105. The first main body 101, the second main body 103, and the third main body 105 are fastened and integrated with each other by bolts.

As illustrated in FIG. 3, a power transmission device 1 is housed across the first main body 101 and the second main body 103. The electric motor 93 is housed in the third main body 105.

The power transmission device 1 includes the first main body 101 and the second main body 103 of the housing 100, a ball screw device 10, a pulley device 20, a first bearing 30a, a second bearing 30b, and preload applying members 40a and 40b.

The ball screw device 10 includes a screw shaft 11, a nut 13, and a plurality of balls 15. A second screw groove 12 is formed on an outer peripheral surface of the screw shaft 11. The screw shaft 11 extends in the vehicle width direction, and passes through the nut 13. The screw shaft 11 is a part of the rack 88b, and does not rotate about a center axis AX. That is, the screw shaft 11 is integrated with the rack 88b.

A first screw groove 14 is formed on an inner peripheral surface of the nut 13. The nut 13 is supported by the first bearing 30a and the second bearing 30b, and is rotatable about the center axis AX. The balls 15 are disposed between the first screw groove 14 of the nut 13 and the second screw groove 12 of the screw shaft 11. The ball 15 endlessly circulates through a rolling path formed by the first screw groove 14 of the nut 13 and the second screw groove 12 of the screw shaft 11. When the nut 13 rotates, the screw shaft 11 (rack 88b) moves in the vehicle width direction. Due to this, rotational motion is converted into rectilinear motion of the rack 88b.

In the following description, a direction parallel with the center axis AX of the nut 13 is referred to as a center axis AX direction. A direction orthogonal to the center axis AX is simply referred to as a radial direction. The radial direction is a direction that is also called a radiation direction.

The pulley device 20 transmits power of the electric motor 93 to the nut 13. The pulley device 20 includes a driving pulley 21, a driven pulley 23, and a belt 25. The driving pulley 21 is a cylindrical component, and is fixed to an output shaft 93a of the electric motor 93. The driven pulley 23 is formed in a cylindrical shape centered on the center axis AX. An inner peripheral side of the driven pulley 23 is continuous to the nut 13. The driven pulley 23 is processed integrally with the nut 13 using the same metallic material. Thus, the driven pulley 23 is integrated with the nut 13. The belt 25 is an endless belt. The belt 25 is wound around the driving pulley 21 and the driven pulley 23. Specifically, the belt 25 is wound around an outer peripheral surface 21a of the driving pulley 21 and an outer peripheral surface 23a of the driven pulley 23. The belt 25 exhibits a load, that is, tension that may cause the outer peripheral surface 21a and the driven pulley 23 to come closer to each other.

As illustrated in FIG. 4, a length L1 in the center axis AX direction on the outer peripheral surface 23a of the driven pulley 23 is identical to a length L2 in the center axis AX direction of the belt 25. On a first end face 23b and a second end face 23c of the driven pulley 23, guides 24a and 24b projecting radially outward from the outer peripheral surface 23a are disposed. Due to this, the belt 25 is regulated so that a position of the belt 25 is not deviated in the center axis AX direction.

With the configuration described above, when the electric motor 93 is driven and rotated, power generated in the electric motor 93 is transmitted to the nut 13 via the pulley device 20. The nut 13 supported by the first bearing 30a and the second bearing 30b then rotates. When the nut 13 rotates, force in the axial direction acts on the rack 88b (screw shaft 11). Accordingly, force of the pinion 88a (steering wheel 81) required for moving the rack 88b is reduced. That is, the electric power steering device 80 is a rack-assist type device.

Each of the first bearing 30a and the second bearing 30b is an angular ball bearing. The first bearing 30a is housed in the second main body 103, and disposed between the second main body 103 and the nut 13. The second bearing 30b is housed in the first main body 101, and disposed between the first main body 101 and the nut 13. The first bearing 30a and the second bearing 30b are disposed to be a face-to-face combination. The driven pulley 23 is disposed between the first bearing 30a and the second bearing 30b. That is, the first bearing 30a and the second bearing 30b hold the driven pulley 23 therebetween at both sides in the center axis AX direction. Hereinafter a direction in which the first bearing 30a is disposed when viewed from the driven pulley 23 in the center axis AX direction is referred to as a first direction side of the center axis AX direction (a left side of FIG. 4), and a direction in which the second bearing 30b is disposed is referred to as a second direction side of the center axis AX direction (a right side of FIG. 4).

As illustrated in FIG. 4, the first bearing 30a and the second bearing 30b respectively include outer rings 31a and 31b, inner rings 33a and 33b, and a plurality of rolling elements 35a and 35b.

The outer rings 31a and 31b are fitted to an inner peripheral surface of the housing 100. More specifically, the outer ring 31a is loosely fit to an inner peripheral surface 103b of the second main body 103. The outer ring 31b is loosely fit to an inner peripheral surface 101b of the first main body 101. Thus, the outer rings 31a and 31b can freely slide in the center axis AX direction with respect to the inner peripheral surfaces 101b and 103b. Additionally, the outer rings 31a and 31b are pressed to come closer to each other by the preload applying members 40a and 40b. Specifically, the outer ring 31a is pressed toward the second direction side by the preload applying member 40a. The outer ring 31b is pressed toward the first direction side by the preload applying member 40b. Due to this, in the first bearing 30a, the rolling elements 35a are brought into contact with an outer ring raceway surface 31c and an inner ring raceway surface 33c, and a preload is applied to the first bearing 30a. Similarly, in the second bearing 30b, the rolling elements 35b are brought into contact with an outer ring raceway surface 31d and an inner ring raceway surface 33d, and a preload is applied to the second bearing 30b. Loads caused by pressing force of the preload applying members 40a and 40b act on the rolling elements 35a and 35b, and an internal gap is in a negative state. In the present embodiment, the outer rings 31a and 31b are loosely fit to the housing 100, but it is sufficient that the outer rings 31a and 31b can slide with respect to the housing 100. Inner diameters of the inner peripheral surfaces 101b and 103b of the housing 100 may be equal to outer diameters of the outer rings 31a and 31b.

In a state in which the preload is applied, a second end face 31e of the outer ring 31a is separated from a first side surface 23d of the driven pulley 23. A first end face 31f of the outer ring 31b is separated from a second side surface 23e of the driven pulley 23. That is, a gap S1 is formed between the outer ring 31a and the driven pulley 23, and a gap S2 is formed between the outer ring 31b and the driven pulley 23.

Due to this, if there is a dimensional error in external shapes of the outer rings 31a and 31b such that the outer rings 31a and 31b are formed to be larger than a predetermined size toward the driven pulley 23 side in the center axis AX direction, the dimensional error is absorbed by the gaps S1 and S2, and the outer rings 31a and 31b are not brought into contact with the driven pulley 23. On the other hand, in a case in which there is a dimensional error in the external shapes of the outer rings 31a and 31b such that the outer rings 31a and 31b are formed to be smaller than the predetermined size toward the driven pulley 23 side in the center axis AX direction, only the gaps S1 and S2 are enlarged, and positions of the outer rings 31a and 31b are not displaced. Thus, it is possible to avoid a situation such that the outer rings 31a and 31b are brought into contact with the driven pulley 23, the outer ring raceway surfaces 31c and 31d are displaced, and the loads acting on the rolling elements 35a and 35b vary.

In a case in which the external shapes of the outer rings 31a and 31b are formed to be larger or smaller than the predetermined size toward a side opposite to the driven pulley 23 in the center axis AX direction, the dimensional error is absorbed by the preload applying members 40a and 40b, so that the outer ring raceway surfaces 31c and 31d are not displaced. Due to this, if there is a dimensional error in the external shapes of the outer rings 31a and 31b, the loads of the preload applying members 40a and 40b acting on the rolling elements 35a and 35b do not vary, so that the preload amount becomes a predetermined amount. That is, the preload amount applied to the first bearing 30a and the second bearing 30b is only pressing force of the preload applying members 40a and 40b, and becomes a constant-pressure preload.

Grease is applied between an outer peripheral surface of the outer ring 31a and the inner peripheral surface 103b of the second main body 103. Additionally, grease is applied between an outer peripheral surface of the outer ring 31b and the inner peripheral surface 101b of the first main body 101. Grooves 36a and 36b for grease that are recessed radially inward and extend in a circumferential direction are formed on outer peripheral surfaces of the outer rings 31a and 31b. Grease is held inside the grooves 36a and 36b for grease. Thus, a larger amount of grease is interposed between the outer peripheral surface of the outer ring 31a and the inner peripheral surface 103b of the second main body 103. Similarly, a larger amount of grease is interposed between the outer peripheral surface of the outer ring 31b and the inner peripheral surface 101b of the first main body 101. Thus, the outer rings 31a and 31b can easily slide with respect to the inner peripheral surface 101b, and frictional heat is hardly generated. It is then prevented that the outer rings 31a and 31b thermally expand and the preload amount varies. To prevent the outer rings 31a and 31b from rotating about the center axis AX with respect to the inner peripheral surfaces 103b and 101b (what is called creeping), key grooves can be disposed on the outer peripheral surfaces or end faces of the outer rings 31a and 31b, or the outer rings 31a and 31b can be pinned.

As illustrated in FIG. 5, the outer ring raceway surfaces 31c and 31d are formed on the inner peripheral surfaces of the outer rings 31a and 31b, respectively. On the inner peripheral surfaces of the outer rings 31a and 31b and inner sides of the outer ring raceway surfaces 31c and 31d, grooves are formed, the grooves on which claw parts of retainers that retain the rolling elements 35a and 35b are hooked.

The inner rings 33a and 33b are made of the same material as that of the nut 13, and integrated with the nut 13. That is, the inner ring raceway surfaces 33c and 33d as a double row are formed on an outer peripheral surface 13a of the nut 13. The inner ring raceway surfaces 33c and 33d are subjected to hardening treatment such as immersion quenching, carburizing treatment, and high-frequency processing, and durability thereof is improved. In the present embodiment, the inner rings 33a and 33b are integrated with the nut 13, but an inner ring separated from the nut 13 may be used.

The rolling elements 35a and 35b are balls. The rolling elements 35a are disposed between the outer ring 31a and the inner ring 33a, and in contact with the outer ring raceway surface 31c of the outer ring 31a and the inner ring raceway surface 33c of the inner ring 33a. A virtual line orthogonal to the center axis AX and passing through a center C1 of each rolling element 35a is referred to as a reference line CNa. An extension line of a virtual line connecting a point of contact P1 between the rolling element 35a and the outer ring raceway surface 31c to a point of contact P2 between the rolling element 35a and the inner ring raceway surface 33c is referred to as an extension line LC1 at the contact angle of the first bearing 30a. The extension line LC1 at the contact angle of the first bearing 30a is inclined with respect to the reference line CNa. That is, the extension line LC1 is inclined to be positioned on the second direction side of the center axis AX direction toward an inner side in the radial direction, and the contact angle formed by the extension line LC1 and the reference line CNa is θ1.

The rolling elements 35b are disposed between the outer ring 31b and the inner ring 33b, and in contact with the outer ring raceway surface 31d of the outer ring 31b and the inner ring raceway surface 33d of the inner ring 33b. A virtual line orthogonal to the axis AX and passing through a center C2 of each rolling element 35b is referred to as a reference line CNb. An extension line of a virtual line connecting a point of contact P3 between the rolling element 35b and the outer ring raceway surface 31d to a point of contact P4 between the rolling element 35b and the inner ring raceway surface 33d is referred to as an extension line LC2 at the contact angle of the second bearing 30b. The extension line LC2 at the contact angle of the second bearing 30b is inclined with respect to the reference line CNa. That is, the extension line LC2 is inclined to be positioned on the first direction side of the center axis AX direction toward the inner side in the radial direction, and the contact angle formed by the extension line LC2 and the reference line CNb is θ2.

With such a configuration of face-to-face combination, the extension line LC1 at the contact angle of the first bearing 30a and the extension line LC2 at the contact angle of the second bearing 30b come closer to each other as approaching the center axis AX. That is, a distance between a first intersection point LA1 of the extension line LC1 at the contact angle of the first bearing 30a and the center axis AX (a working point of the first bearing 30a) and a second intersection point LA2 of the extension line LC2 at the contact angle of the second bearing 30b and the center axis AX (a working point of the second bearing 30b) is shorter than that in a case in which the first bearing 30a and the second bearing 30b are disposed in back-to-back combination. That is, the first bearing 30a and the second bearing 30b each have low rigidity against a moment load.

In the present embodiment, the first intersection point LA1 of the extension line LC1 at the contact angle of the first bearing 30a and the center axis AX agrees with the second intersection point LA2 of the extension line LC2 at the contact angle of the second bearing 30b and the center axis AX. That is, on the center axis AX, a distance between the working points including the first intersection point LA1 and the second intersection point LA2 is zero. With this configuration, the first bearing 30a and the second bearing 30b support the ball screw device 10 substantially at one intersection point LAX. Due to this, the rigidity of the first bearing 30a and the second bearing 30b against a moment load is further reduced. Thus, while the vehicle is traveling, even if a moment load is input to the first bearing 30a and the second bearing 30b, a moment load input to the ball screw device 10 as a reaction is largely reduced. Accordingly, a strange sound can be prevented from being caused in the ball screw device 10 due to an input of the moment load.

A virtual line CN orthogonal to the center axis AX of the nut 13 and passing through a center 23f in the center axis AX direction of the outer peripheral surface 23a of the driven pulley 23 passes through between the first intersection point LA1 and the second intersection point LA2 on the center axis AX. In the present embodiment, the first intersection point LA1 agrees with the second intersection point LA2 on the center axis AX, so that the virtual line CN passes through both of the first intersection point LA1 and the second intersection point LA2 on the center axis AX. Due to this, fulcrums of the first bearing 30a and the second bearing 30b (the intersection point LAX) agrees with a point of application of tension of the belt 25 on the center axis AX. Thus, a moment load is not generated even if tension of the belt 25 acts on the nut 13.

The preload applying members 40a and 40b are constituted of elastic bodies, which are ring-shaped pieces of rubber centered on the center axis AX. The preload applying member 40a is disposed between the outer ring 31a of the first bearing 30a and a stepped surface 103a of the second main body 103. The preload applying member 40b is disposed between the outer ring 31b of the second bearing 30b and a stepped surface 101a of the first main body 101. The preload applying members 40a and 40b are assembled into the housing 100 and subjected to a compressive load in the center axis AX direction, and press the outer rings 31a and 31b of the first bearing 30a and the second bearing 30b, respectively.

The preload applying members 40a and 40b are disposed on both sides in the center axis AX direction of the first bearing 30a and the second bearing 30b. The first bearing 30a and the second bearing 30b can be displaced along the center axis AX direction. Due to this, in a case in which a distance between the stepped surface 103a of the second main body 103 and the stepped surface 101a of the first main body 101 in the center axis AX direction is not a predetermined length, in other words, in a case in which there is a manufacturing error in the first main body 101 and the second main body 103 of the housing 100, the preload applying members 40a and 40b absorb the error. Thus, if there is a manufacturing error in the first main body 101 and the second main body 103 of the housing 100, the preload amount of the first bearing 30a and the second bearing 30b does not vary. In a case in which a large impact load acts on the rack 88b in the center axis AX direction, the preload applying members 40a and 40b absorb the impact load. Vibration in the center axis AX direction is suppressed around the ball screw device 10 by the preload applying members 40a and 40b, and what is called a rattling sound is reduced.

As described above, the power transmission device 1 includes: the housing 100; the ball screw device 10 including the nut 13 housed in the housing 100, the screw shaft 11 passing through the nut 13, and the balls 15 disposed between the nut 13 and the screw shaft 11; the pulley device 20 including the driving pulley 21 to be driven by receiving power transmitted from the power source, the driven pulley 23 fixed to the nut 13, and the belt 25 wound around the outer peripheral surfaces of the driving pulley 21 and the driven pulley 23; and the first bearing 30a and the second bearing 30b disposed between the housing 100 and the nut 13 in the center axis AX direction parallel with the center axis AX of the nut 13. The first bearing 30a and the second bearing 30b are disposed to be a face-to-face combination. That is, the first bearing 30a and the second bearing 30b have a configuration of face-to-face combination in which the distance between the working points is small. Thus, the rigidity of the first bearing 30a and the second bearing 30b against a moment load is low. Accordingly, the moment load input to the ball screw device 10 is reduced, and a strange sound is prevented from being caused.

In the power transmission device 1, the first bearing 30a and the second bearing 30b are disposed on both sides of the driven pulley 23, respectively. In other words, the first bearing 30a and the second bearing 30b are respectively disposed to be adjacent to the driven pulley 23, and hold the driven pulley 23 from both sides in the center axis AX direction via the gaps S1 and S2. The virtual line CN orthogonal to the center axis AX of the nut 13 and passing through the center 23f in the center axis AX direction of the outer peripheral surface 23a of the driven pulley 23 passes through between the first intersection point LA1 at which the extension line LC1 at the contact angle of the first bearing 30a intersects with the center axis AX of the nut 13 and the second intersection point LA2 at which the extension line LC2 at the contact angle of the second bearing 30b intersects with the center axis AX of the nut 13. The nut 13 is supported by two points including the first intersection point LA1 and the second intersection point LA2, so that the load of the tension of the belt 25 acts between the two points due to the configuration described above. Accordingly, the moment load caused by the tension of the belt 25 is reduced.

In the power transmission device 1, the first intersection point LA1 at which the extension line LC1 at the contact angle of the first bearing 30a intersects with the center axis AX of the nut 13 agrees with the second intersection point LA2 at which the extension line LC2 at the contact angle of the second bearing 30b intersects with the center axis AX of the nut 13, on the center axis AX of the nut 13. The virtual line CN orthogonal to the center axis AX of the nut 13 and passing through the center 23f in the center axis AX direction of the outer peripheral surface 23a of the driven pulley 23 passes through a center between the first intersection point LA1 and the second intersection point LA2. Accordingly, a moment load is not generated even if the tension of the belt 25 acts on the nut 13.

The power transmission device 1 also includes the preload applying members 40a and 40b that apply preloads to the first bearing 30a and the second bearing 30b, respectively. The first bearing 30a and the second bearing 30b respectively include the outer rings 31a and 31b to be fitted to the housing 100. The outer rings 31a and 31b are pressed toward the driven pulley 23 by the preload applying members 40a and 40b, and are separated from the driven pulley 23 with the gaps S1 and S2 between the outer rings 31a and 31b and the driven pulley 23. Due to this, if there is a dimensional error in the outer rings 31a and 31b in the center axis AX direction, the gaps S1 and S2 between the outer rings 31a and 31b and the driven pulley 23 are changed, or the preload applying members 40a and 40b are deformed, and thereby the dimensional error is absorbed. Thus, the outer ring raceway surfaces 31c and 31d are not displaced in the center axis AX direction, and only the loads caused by pressing force of the preload applying members 40a and 40b act on the rolling elements 35a and 35b. As a result, the predetermined preload amount is achieved, and the bearing torque can be stabilized.

In the power transmission device 1, the two inner ring raceway surfaces 33c and 33d are formed on the outer peripheral surface of the nut 13, the inner ring raceway surfaces 33c and 33d subjected to hardening treatment on which the rolling elements 35a and 35b roll. Due to this, the inner rings 33a and 33b are not required, so that the power transmission device 1 can be downsized in the radial direction. The inner rings 33a and 33b are not displaced even when receiving a load in the center axis AX direction from the adjacent driven pulley 23. That is, as described in a second embodiment and a third modification that is described later, in a case in which the driven pulley 23 receives vibration of the belt 25, thereby being subjected to a load that may cause the driven pulley 23 to deviate in the center axis AX direction, and therefore the driven pulley 23 may press the inner rings 33a and 33b. If the inner rings 33a and 33b move, a pressing amount of pressing the rolling elements 35a and 35b being in contact with the inner ring raceway surfaces 33c and 33d of the inner rings 33a and 33b is increased, and the bearing torque is increased. Thus, in the present embodiment, movement of the inner rings 33a and 33b in the center axis AX direction is regulated to prevent the bearing torque from being increased.

In the power transmission device 1, the driven pulley 23 is molded integrally with the nut 13 using the same metallic material. Due to this, the number of components is reduced, and assembling man-hours are reduced. Additionally, the position of the driven pulley 23 is not deviated in the circumferential direction with respect to the nut 13. Thus, it can be prevented that the driven pulley 23 idles with respect to the nut 13 and power is not transmitted. Additionally, the position of the driven pulley 23 is not deviated in the center axis AX direction with respect to the nut 13. Thus, it can be prevented that the driven pulley 23 moves in the center axis AX direction to be brought into contact with the outer rings 31a and 31b and the preload amount is changed. With the configuration described above, in a case in which the inner rings 33a and 33b are formed to be separated from the nut 13, it can be prevented that the driven pulley 23 presses the inner rings 33a and 33b and the bearing torque is increased.

In the power transmission device, the preload applying members 40a and 40b are disposed on both sides of the first bearing 30a and the second bearing 30b. Due to this, a manufacturing error in the housing 100 in the center axis AX direction is absorbed by the preload applying members 40a and 40b, and the preload amount is prevented from varying.


(First modification)

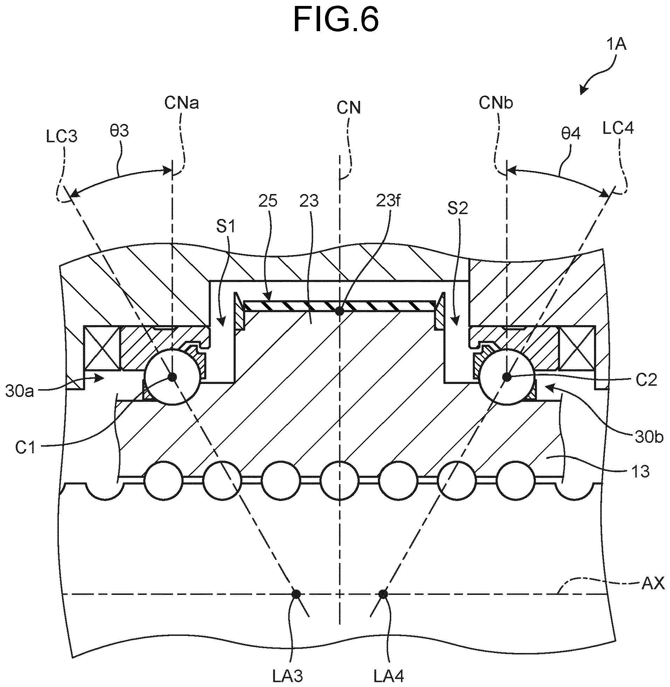

FIG. 6 is a cross-sectional view of the power transmission device according to a first modification. In the following description, the same constituent element as that in the embodiment described above is denoted by the same reference numeral, and redundant description will be omitted.

A power transmission device 1A according to the first modification is different from the power transmission device 1 according to the first embodiment in the following points. In the power transmission device 1A according to the first modification, a contact angle formed by the reference line CNa and an extension line LC3 at the contact angle of the first bearing 30a is θ3. In the power transmission device 1A according to the first modification, a contact angle formed by the reference line CNb and an extension line LC4 at the contact angle of the second bearing 30b is θ4.

Specifically, the contact angle θ3 formed by the reference line CNa and the extension line LC3 at the contact angle of the first bearing 30a is smaller than the contact angle θ1 in the first embodiment. Additionally, the contact angle θ4 formed by the reference line CNb and the extension line LC4 at the contact angle of the second bearing 30b is smaller than the contact angle θ2 in the first embodiment. Due to this, the extension line LC3 at the contact angle of the first bearing 30a and the extension line LC4 at the contact angle of the second bearing 30b come closer to each other as approaching the center axis AX from the centers C1 and C2 of the rolling elements 35a and 35b, but do not intersect with each other before reaching the center axis AX. Thus, the first bearing 30a and the second bearing 30b support the ball screw device at two points, that is, a first intersection point LA3 (a working point of the first bearing 30a) and a second intersection point LA4 (a working point of the second bearing 30b). Also in such an example, the distance between the working points (a distance between the first intersection point LA3 and the second intersection point LA4) is shorter than that in the case of a back-to-back combination, and the rigidity against the moment load is low.

The virtual line CN orthogonal to the center axis AX of the nut 13 and passing through the center 23f in the center axis AX direction of the outer peripheral surface 23a of the driven pulley 23 passes through a center between the first intersection point LA3 and the second intersection point LA4. Due to this, distances between the point of application of tension of the belt 25 and the respective working points of the first bearing 30a and the second bearing 30b are equivalent to each other. Thus, the moment load caused in the nut 13 by tension of the belt 25 is extremely small. The virtual line CN passes through the center between the first intersection point LA3 and the second intersection point LA4, so that the load caused by the tension of the belt 25 uniformly acts on the first bearing 30a and the second bearing 30b.

As described above, the virtual line CN of the power transmission device 1A passes through the center between the first intersection point LA1 and the second intersection point LA2. Due to this, the load caused by the tension of the belt 25 is not biased toward the first bearing 30a or the second bearing 30b, and the durability of the first bearing 30a and the second bearing 30b is improved.

(Second modification)

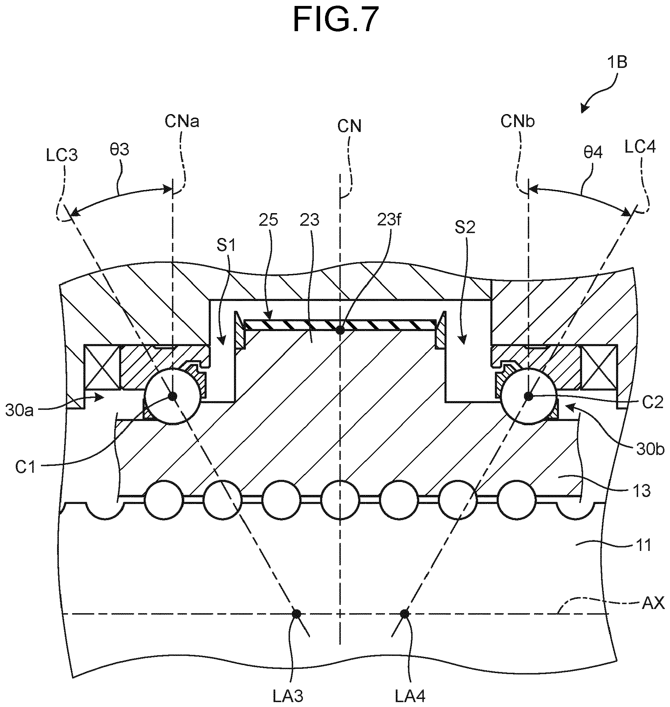

FIG. 7 is a cross-sectional view of the power transmission device according to a second modification. A power transmission device 1B according to the second modification is different from the power transmission device 1A according to the first modification in that the distance between the second bearing 30b and the driven pulley 23 is large and the gap S2 is expanded.

Due to this, the extension line LC4 at the contact angle of the second bearing 30b is moved to be closer to the second direction side than the first modification. The virtual line CN orthogonal to the center axis AX of the nut 13 and passing through the center 23f in the center axis AX direction of the outer peripheral surface 23a of the driven pulley 23 does not pass through the center between the first intersection point LA3 and the second intersection point LA4, but passes through a point closer to the first intersection point LA3.

As described above, the power transmission device 1B passes through between the first intersection point LA3 at which the extension line LC3 at the contact angle of the first bearing 30a intersects with the center axis AX of the nut 13 and the second intersection point LA4 at which the extension line LC4 at the contact angle of the second bearing 30b intersects with the center axis AX of the nut 13. Due to this, distances between the point of application of tension of the belt 25 and the respective working points of the first bearing 30a and the second bearing 30b are substantially equivalent to each other, and the moment load caused in the nut 13 by the tension of the belt 25 is extremely small.

(Second embodiment)

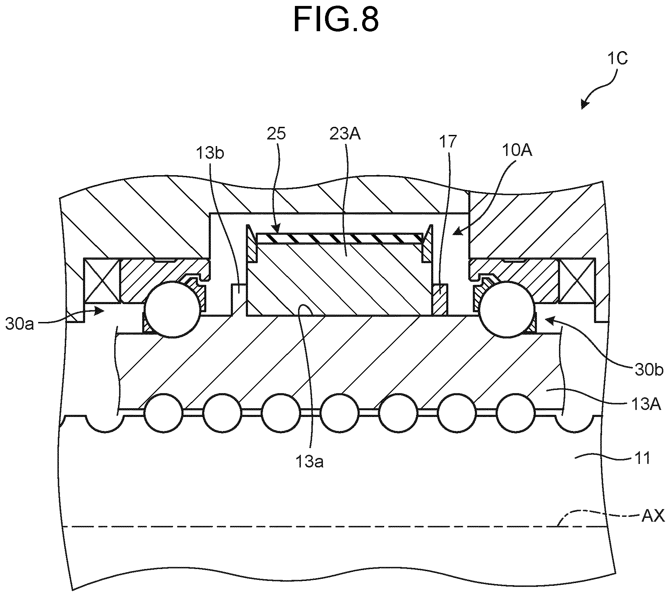

FIG. 8 is a cross-sectional view of the power transmission device according to the second embodiment. A power transmission device 1C according to the second embodiment is different from the power transmission device 1 according to the first embodiment in that the power transmission device 1C includes a nut 13A made of a metallic material and a driven pulley 23A made of a resin material instead of the nut 13 and the driven pulley 23 integrally made of a metallic material.

The driven pulley 23A engages with the outer peripheral surface 13a of the nut 13A in a ball screw device 10A. A first end face of the driven pulley 23A is in contact with a wall part 13b of the nut 13A. A second end face of the driven pulley 23A is in contact with a positioning member 17. The driven pulley 23A is positioned in the center axis AX direction by the positioning member 17 and the wall part 13b. The positioning member 17 is called a locknut.

According to the configuration described above, the nut 13A subjected to a load in the center axis AX direction is made of a metallic material, and the driven pulley 23A is made of a lightweight resin material. Thus, weight reduction is achieved while maintaining rigidity and durability of the power transmission device 1C.

(Third modification)

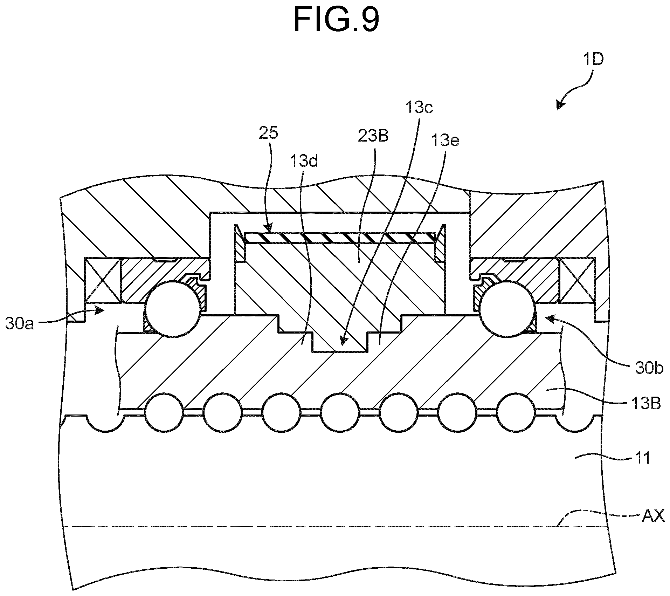

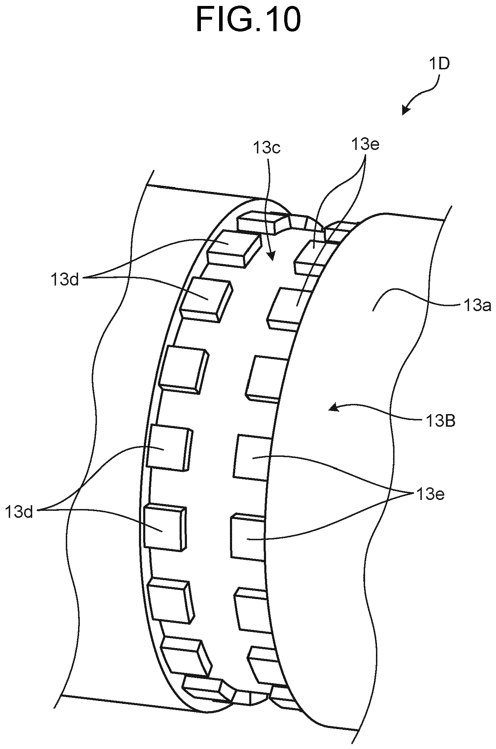

FIG. 9 is a cross-sectional view of the power transmission device according to the third modification. FIG. 10 is a perspective view of enlarging and obliquely viewing a part of the nut according to the third modification. A power transmission device 1D according to the third modification is different from the power transmission device 1C according to the second embodiment in that a nut 13B made of a metallic material and a driven pulley 23B made of a resin material are integrated with each other by insert molding.

As illustrated in FIG. 9 and FIG. 10, a groove part 13c that is recessed radially inward and extends in the circumferential direction is formed on the outer peripheral surface 13a of the nut 13B. A pair of projections 13d and 13e projecting radially outward are formed on a bottom surface of the groove part 13c. The paired projections 13d and 13e are separated from each other in the center axis AX direction. A plurality of the pairs of projections 13d and 13e are formed in the circumferential direction. The projection 13d is separated from the projection 13d that is adjacent thereto in the circumferential direction. The projection 13e is separated from the projection 13e that is adjacent thereto in the circumferential direction. Due to this, in a case of molding a resin material by inserting the nut 13B into a metal die, cured resin, that is, a part of the driven pulley 23B enters between the pair of projections 13d and 13e, between the projections 13d, and between the projections 13e. Thus, the pair of projections 13d and 13e is embedded in the driven pulley 23B.

As described above, in the power transmission device 1D, the groove part 13c that is recessed radially inward is formed on the outer peripheral surface 13a of the nut 13B, the driven pulley 23B is made of resin and integrated with the nut 13B by insert molding, and a part of the driven pulley 23B enters the groove part 13C. Movement of the driven pulley 23B in the center axis AX direction can be regulated. Thus, it can be prevented that the driven pulley 23B is brought into contact with the first bearing 30a and the second bearing 30b and the preload amount is changed. In the groove part 13c, a part of the driven pulley 23B enters between the projections 13d and 13e adjacent to each other in the circumferential direction. Due to this, relative rotation of the driven pulley 23B with respect to the nut 13B is regulated. Accordingly, rotational motion of the driven pulley 23B can be securely transmitted to the nut 13B.

(Third embodiment)

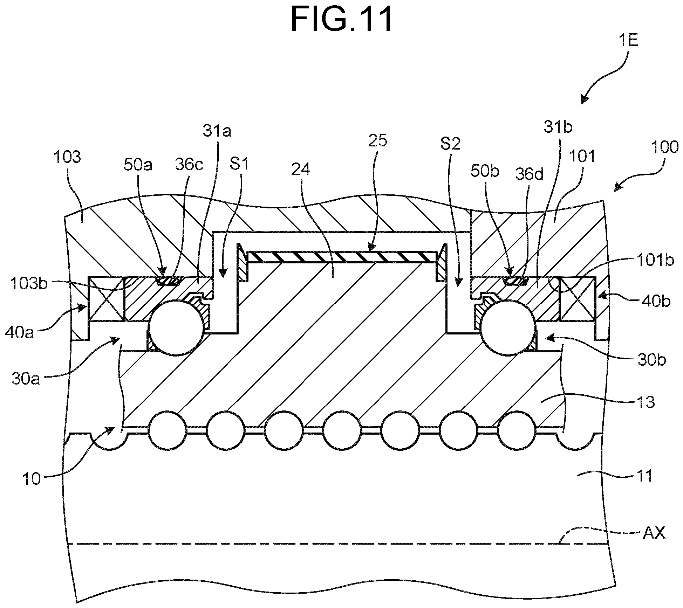

FIG. 11 is a cross-sectional view of the power transmission device according to the third embodiment. A power transmission device 1E according to the third embodiment is different from the power transmission device 1 according to the first embodiment in the following points. In the first bearing 30a and the second bearing 30b of the power transmission device 1E according to the third embodiment, the grooves 36a and 36b for grease (refer to FIG. 4) are not formed on the outer peripheral surfaces of the outer rings 31a and 31b, but recessed parts 36c and 36d extending in the circumferential direction are respectively formed thereon. An elastic member 50a is interposed between the outer ring 31a and the inner peripheral surface 103b of the second main body 103. An elastic member 50b is interposed between the outer ring 31b and the inner peripheral surface 101b of the first main body 101.

The recessed parts 36c and 36d are grooves for respectively housing the elastic members 50a and 50b. Accordingly, when the outer rings 31a and 31b slide in the center axis AX direction, the elastic members 50a and 50b are displaced in the center axis AX direction together with the outer rings 31a and 31b. Each of the elastic members 50a and 50b is an O-ring having a circular cross-sectional shape. Outer peripheral parts of the elastic members 50a and 50b project radially outward from the outer peripheral surfaces of the outer rings 31a and 31b. Thus, the elastic member 50a housed in the recessed part 36c of the outer ring 31a abuts on the inner peripheral surface 103b of the second main body 103. The elastic member 50b housed in the recessed part 36d of the outer ring 31b abuts on the inner peripheral surface 101b of the first main body 101.

As described above, in the power transmission device 1E, the elastic members 50a and 50b are interposed between the outer peripheral surfaces of the outer rings 31a and 31b and the housing 100. Due to this, vibration of the ball screw device 10 in the radial direction is absorbed by the elastic members 50a and 50b, and what is called a rattling sound is prevented from being caused. In the present embodiment, O-rings are used as the elastic members 50a and 50b, but cylindrical resin members surrounding the outer peripheral sides of the outer rings 31a and 31b may be used. Due to this, larger areas of the outer peripheral surfaces of the outer rings 31a and 31b can be covered as compared with the O-rings, so that what is called a rattling sound can be securely prevented from being caused. In a case of using a cylindrical resin member, the recessed parts 36c and 36d are not required to be formed.

(Fourth embodiment)

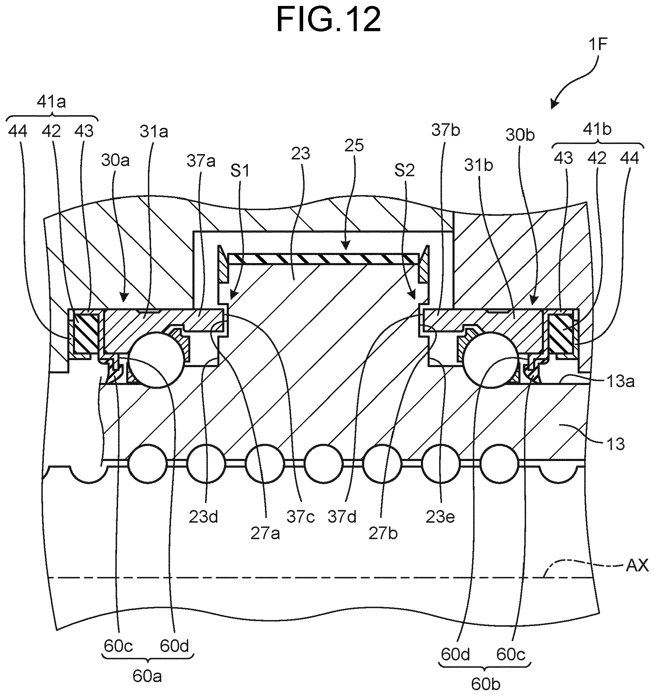

FIG. 12 is a cross-sectional view of the power transmission device according to a fourth embodiment. A power transmission device 1F according to the fourth embodiment is different from the power transmission device 1 according to the first embodiment in the following points. The power transmission device 1F according to the fourth embodiment includes preload applying members 41a and 41b in place of the preload applying members 40a and 40b. The power transmission device 1F according to the fourth embodiment further includes first sealing members 60a and 60b. Extending parts 37a and 37b extending toward the driven pulley 23 side are formed on the outer rings 31a and 31b. Recessed parts 27a and 27b are formed on the first side surface 23d and the second side surface 23e of the driven pulley 23.

The preload applying members 41a and 41b, the first sealing members 60a and 60b, the extending parts 37a and 37b, and the recessed parts 27a and 27b are separately disposed to be divided into the first bearing 30a side and the second bearing 30b side across the driven pulley 23 as a boundary. The preload applying members 41a and 41b, the first sealing members 60a and 60b, the extending parts 37a and 37b, and the recessed parts 27a and 27b are plane-symmetrically formed with respect to the driven pulley 23. Thus, each configuration will be described exemplifying a configuration disposed on the first bearing 30a side with respect to the driven pulley 23, and description about a configuration disposed on the second bearing 30b side will be omitted. Also in the following embodiments, regarding configurations that are separately disposed on the first bearing 30a side and the second bearing 30b side across the driven pulley 23 as a boundary and are formed symmetrically with respect to the driven pulley 23, configurations disposed on the first bearing 30a side will be exemplified.

The preload applying member 41a includes an elastic body 42 for preloading made of rubber, a first cored bar 43, and a second cored bar 44. The first cored bar 43 and the second cored bar 44 are configured to hold a shape of the elastic body 42 for preloading, and integrated with the elastic body 42 for preloading by vulcanization bonding.

The first sealing member 60a includes an elastic body 60c for inner circumference sealing made of rubber that is in slidably contact with the outer peripheral surface 13a of the nut 13, and a third cored bar 60d engaging with the inner peripheral surface of the outer ring 31a and supporting the elastic body 60c for inner circumference sealing. Due to this, an inner peripheral side and the first direction side of the outer ring 31a are closed.

The first cored bar 43 is continuous to the third cored bar 60d, and the first sealing member 60a and the preload applying member 41a are integrated with each other. Due to this, when the third cored bar 60d of the first sealing member 60a is fitted into the outer ring 31a, the preload applying member 41a is also assembled thereto, so that man-hours for assembling work are reduced.

The recessed part 27a is formed by recessing a portion opposed to the outer ring 31a of the first side surface 23d of the driven pulley 23. An end part 37c of the extending part 37a enters the recessed part 27a. The end part 37c of the extending part 37a is not in contact with the recessed part 27a. A minute gap is formed between the end part 37 of the extending part 37a and the recessed part 27a to configure a labyrinth seal having a substantially C-shaped cross section. Additionally, grease (not illustrated) is filled in the recessed part 27a.

As described above, in the power transmission device 1F, the recessed parts 27a and 27b are formed on the side surfaces of the driven pulley 23 opposed to the end faces of the outer rings 31a and 31b, the extending parts 37a and 37b extending toward inner sides of the recessed parts 27a and 27b are formed on the outer rings 31a and 31b, end parts 37c and 37d of the extending parts 37a and 37b enter the recessed parts 27a and 27b, and labyrinth structures are made by minute gaps between the end parts 37c and 37d of the extending parts 37a and 37b and the recessed parts 27a and 27b. Due to this, spaces between the outer rings 31a and 31b and the driven pulley 23 are closed, and abrasion powder of the driven pulley 23 and the belt 25 hardly enters the first bearing 30a and the second bearing 30b.

Grease (not illustrated) is filled in the recessed parts 27a and 27b of the power transmission device 1F. Due to this, the abrasion powder is adsorbed by the grease, so that the abrasion powder more hardly enters the first bearing 30a and the second bearing 30b.

In the power transmission device 1F, on the end parts of the outer rings 31a and 31b facing the preload applying members 41a and 41b, the first sealing members 60a and 60b being in slidably contact with the outer peripheral surface 13a of the nut 13 are disposed. Due to this, foreign substances on sides of the preload applying members 41a and 41b hardly enter the first bearing 30a and the second bearing 30b.

(Fifth embodiment)

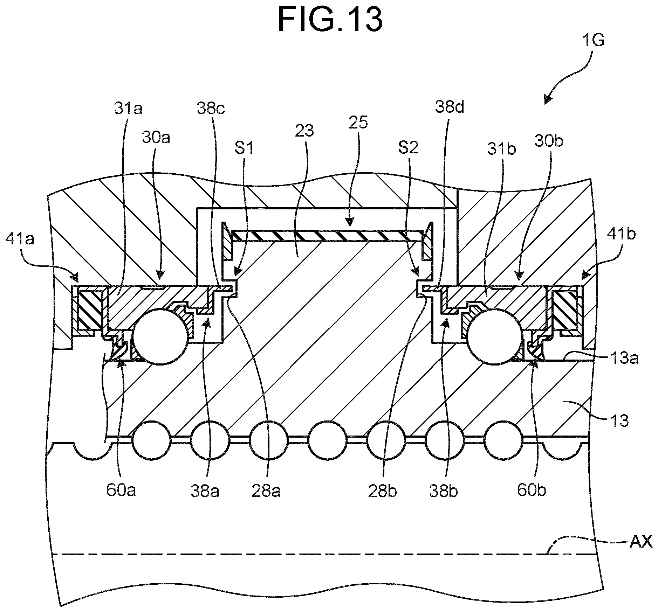

FIG. 13 is a cross-sectional view of the power transmission device according to a fifth embodiment. A power transmission device 1G according to the fifth embodiment is different from the power transmission device 1F according to the fourth embodiment in that shielding members 38a and 38b extending toward the driven pulley 23 side are disposed in place of the extending parts 37a and 37b on the outer rings 31a and 31b.

The shielding member 38a is an annular member made of metal, and engages with the inner peripheral side of the outer ring 31a. Thus, the shielding member 38a is removable from the outer ring 31a. The shielding member 38a includes a cylindrical part 38c having a cylindrical shape that extends from the end part of the outer ring 31a toward the driven pulley 23. An end part of the cylindrical part 38c enters a recessed part 28a formed on the side surface of the driven pulley 23. The end part of the cylindrical part 38c is not in contact with the recessed part 28a. A minute gap is formed between the end part of the cylindrical part 38c and the recessed part 28a to configure a labyrinth seal having a substantially C-shaped cross section. Additionally, grease (not illustrated) is applied to the inside of the recessed part 28a.

As described above, the power transmission device 1G includes the shielding members 38a and 38b that are fixed to the outer rings 31a and 31b, extend toward the side surface of the driven pulley 23, and close the gaps S1 and S2 between the outer rings 31a and 31b and the driven pulley 23. Recessed parts 28a and 28b are formed on the side surfaces of the driven pulley 23 opposite to the end faces of the outer rings 31a and 31b, and end parts of the cylindrical parts 38c and 38d of the shielding members 38 enter the recessed parts 28a and 28b. The labyrinth structures are made by minute gaps between the recessed parts 28a and 28b and the end parts of the cylindrical parts 38c and 38d of the shielding members 38a and 38b. Due to this, spaces between the outer rings 31a and 31b and the driven pulley 23 are closed, and abrasion powder of the driven pulley 23 and the belt 25 hardly enters the first bearing 30a and the second bearing 30b. Furthermore, the grease is applied to the inside of the recessed parts 28a and 28b, so that the abrasion powder more hardly enters the first bearing 30a and the second bearing 30b.

There is a dimensional error in the center axis AX direction in the outer rings 31a and 31b, so that there is the possibility that the end parts of the cylindrical parts 38c and 38d of the shielding members 38a and 38b are brought into contact with inner surfaces of the recessed parts 28a and 28b and the preload amounts of the first bearing 30a and the second bearing 30b are changed due to the dimensional error. Alternatively, there is the possibility that the end parts of the cylindrical parts 38c and 38d do not enter the recessed parts 28a and 28b and the labyrinth structure cannot be formed. However, the shielding members 38a and 38b are removable from the outer rings 31a and 31b. Thus, a plurality of the shielding members 38a and 38b including the cylindrical parts 38c and 38d having different lengths can be prepared, and appropriate shielding members 38a and 38b can be selected to be attached for each product. As described above, according to the present embodiment, it is possible to appropriately manage the minute gaps (gaps S1 and S2) formed between the end parts of the cylindrical parts 38c and 38d and the inner surfaces of the recessed parts 28a and 28b. Thus, it can be prevented that the end parts of the cylindrical parts 38c and 38d are brought into contact with the inner surfaces of the recessed parts 28a and 28b and the preload amounts of the first bearing 30a and the second bearing 30b are changed. Alternatively, it can be prevented that the end parts of the cylindrical parts 38c and 38d do not enter the recessed parts 28a and 28b and the labyrinth structure cannot be formed.

(Sixth embodiment)

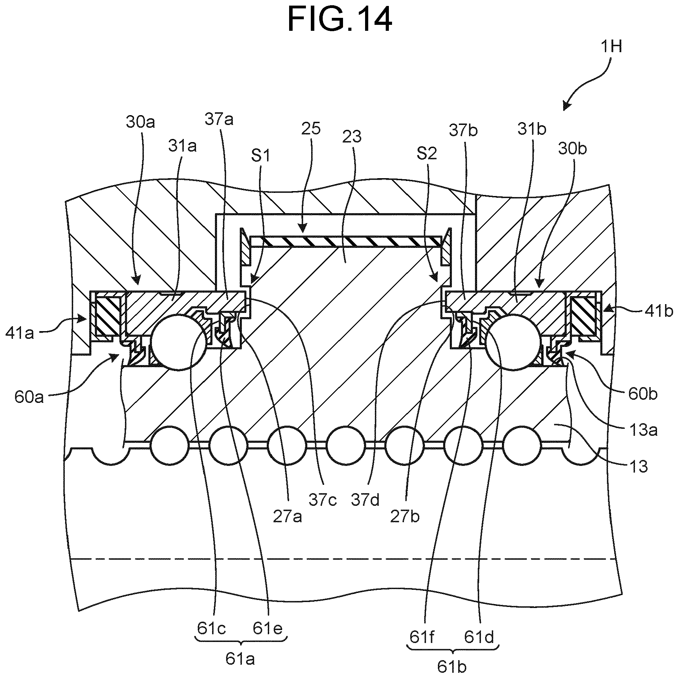

FIG. 14 is a cross-sectional view of the power transmission device according to a sixth embodiment. A power transmission device 1H according to the sixth embodiment is different from the power transmission device 1F according to the fourth embodiment in that the power transmission device 1H further includes second sealing members 61a and 61b. The second sealing members 61a and 61b include fourth cored bars 61c and 61d engaging with the inner peripheral sides of the extending parts 37a and 37b of the outer rings 31a and 31b, and elastic bodies 61e and 61f for inner circumference sealing that are supported by the fourth cored bars 61c and 61d and in slidably contact with the outer peripheral surface 13a of the nut 13.

As described above, in the power transmission device 1H, the second sealing members 61a and 61b being in slidably contact with the outer peripheral surface 13a of the nut 13 are disposed on the end parts of the outer rings 31a and 31b facing the driven pulley 23. Due to this, abrasion powder of the driven pulley 23 and the belt 25 more hardly enter the first bearing 30a and the second bearing 30b.

(Seventh embodiment)

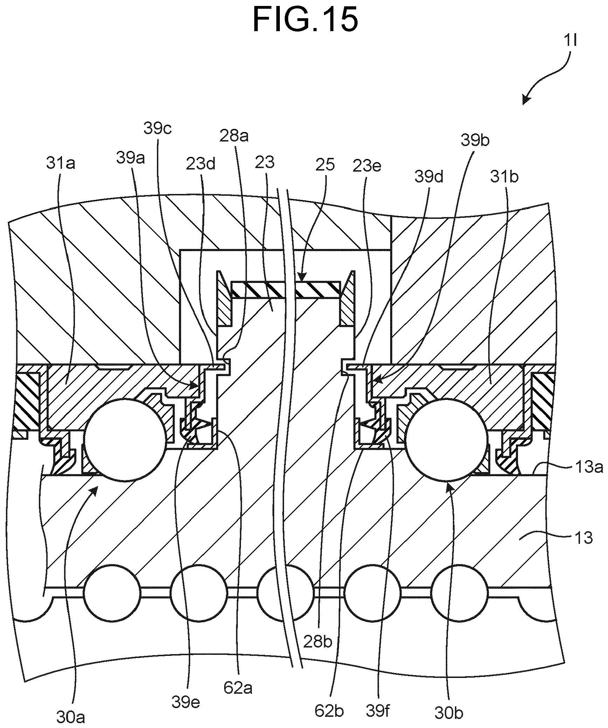

FIG. 15 is a cross-sectional view of the power transmission device according to a seventh embodiment. A power transmission device 1I according to the seventh embodiment is different from the power transmission device 1G according to the fifth embodiment in that the power transmission device 1I includes shielding members 39a and 39b including cylindrical parts 39c and 39d entering the recessed parts 28a and 28b in place of the shielding members 38a and 38b. Elastic bodies 39e and 39f for sealing are disposed on the shielding members 39a and 39b. Furthermore, the power transmission device 1I according to the seventh embodiment is different from the power transmission device 1G according to the fifth embodiment in that covering components 62a and 62b having L-shaped cross sections are disposed on parts with which the elastic bodies 39e and 39f for sealing are brought into slidably contact.

The shielding member 39a is a cored bar, and includes the cylindrical part 39c extending toward the driven pulley 23 and entering the recessed part 28a. A minute gap is formed between the end part of the cylindrical part 39c and the recessed part 28a to configure a labyrinth seal having a substantially C-shaped cross section. Grease (not illustrated) is applied to the inside of the recessed part 28a. The shielding member 39a engages with the inner peripheral side of the outer ring 31a. Thus, the shielding member 39a is removable from the outer ring 31a. Thus, a plurality of the shielding members 39a and 39b including the cylindrical parts 39c and 39d having different lengths can be prepared, and appropriate shielding members 39a and 39b can be selected to be attached for each product.

The elastic body 39e for sealing is fixed to the shielding member 39a by vulcanization bonding. The covering component 62a is a component made of metal, and covers the outer peripheral surface 13a of the nut 13 and the first side surface 23d of the driven pulley 23. Due to this, it can be prevented that the elastic body 39e for sealing is brought into slidably contact with the outer peripheral surface 13a and the like of the nut 13 having high surface roughness to be remarkably worn.

(Eighth embodiment)

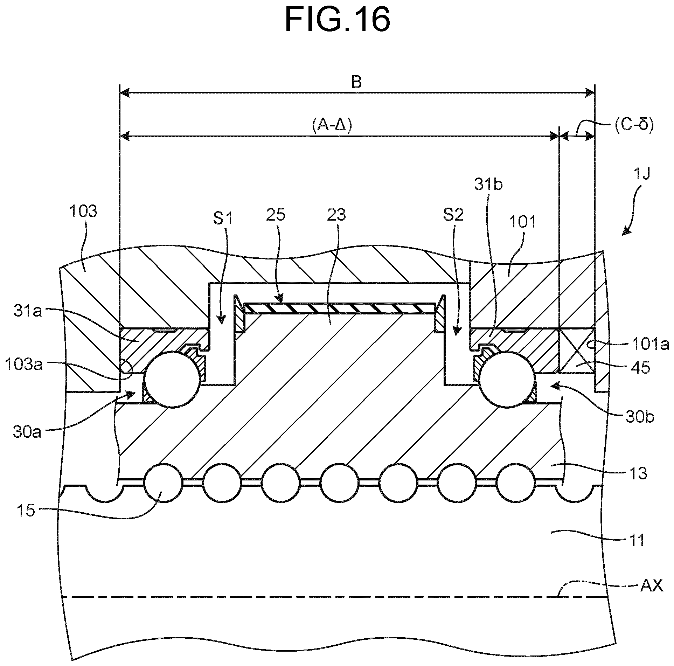

FIG. 16 is a cross-sectional view of the power transmission device according to an eighth embodiment. A power transmission device 1J according to the eighth embodiment is different from the power transmission device 1 according to the first embodiment in that the power transmission device 1J uses a preload applying member 45 in place of the preload applying members 40a and 40b. In the eighth embodiment, preloads are applied to the first bearing 30a and the second bearing 30b by the one preload applying member 45.

The preload applying member 45 is a spacer the dimension C of which in the center axis AX direction is adjusted. Thus, in the eighth embodiment, preloads are applied to the first bearing 30a and the second bearing 30b by fixed-position preloading. Examples of a material of the preload applying member 45 include iron, an aluminum alloy, a magnesium alloy, or resin. The dimension C of the preload applying member 45 in the center axis AX direction is represented by the following expression 1.

$$C = \delta + B - (A - \Delta) \qquad \text{(Expression 1)}$$

In the expression 1, A indicates a dimension in the center axis AX direction in a state in which preloads are not applied to the first bearing 30a and the second bearing 30b. (A - $\Delta$) indicates a dimension in the center axis AX direction in a state in which preloads are applied to the first bearing 30a and the second bearing 30b. B indicates a distance between the stepped surface 101a of the first main body 101 and the stepped surface 103a of the second main body 103. $\sigma$ indicates an elastic deformation amount generated when a state of not applying a preload by the preload applying member 45 is changed to a state of applying a preload.

With the power transmission device 1J described above, changes in the preload amount along with temperature changes can be reduced by appropriately selecting a material of the preload applying member 45 as a spacer. More specifically, dimensions of the housing 100 and the outer rings 31a and 31b in the center axis AX direction are increased when they are expanded due to temperature rise. In a case in which the housing 100 is made of an aluminum alloy and the outer rings 31a and 31b are made of bearing steel, if the preload applying member 45 made of iron is selected, an expansion amount of the preload applying member 45 becomes smaller than an expansion amount of the housing 100 because a linear expansion coefficient of the aluminum alloy is larger than that of the iron, so that the preload amount by fixed-position preloading is reduced. Thus, by selecting the preload applying member 45 made of an aluminum alloy that is formed with the same material as that of the housing 100 made of an aluminum alloy, lowering of the preload amount along with temperature changes can be relieved. Due to this, changes in the preload amount can be relieved as compared with a case of selecting the preload applying member 45 made of resin. In the power transmission device 1J described above, constant-pressure preloads are applied to the first bearing 30a and the second bearing 30b by the one preload applying member 45, and the dimension of the power transmission device 1J in the center axis AX direction is reduced to achieve downsizing of the device.

(Ninth embodiment)

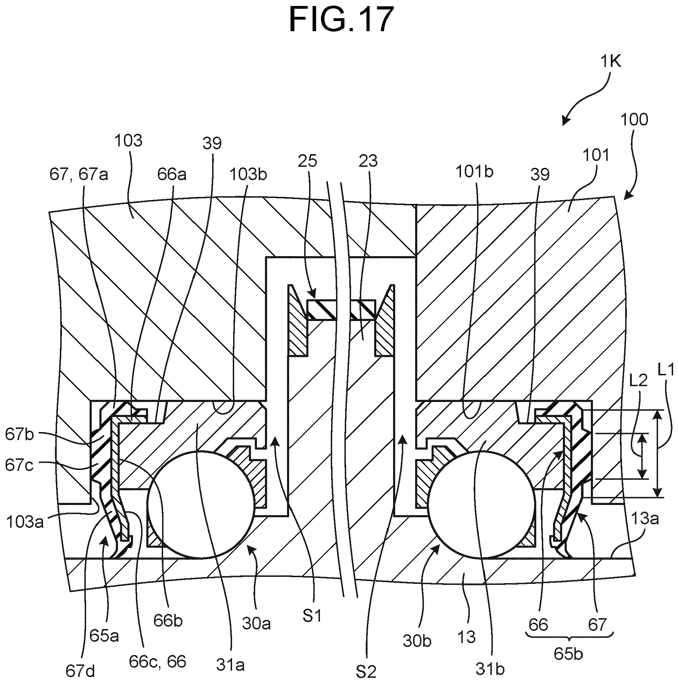

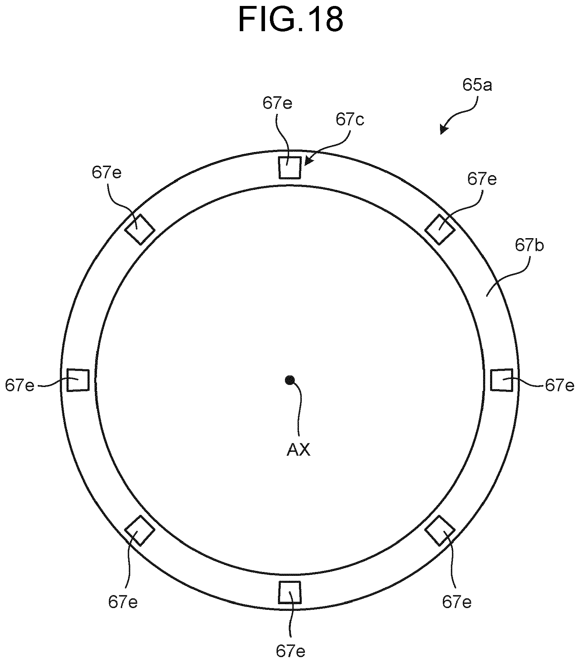

FIG. 17 is a cross-sectional view of the power transmission device according to a ninth embodiment. FIG. 18 is a schematic diagram extracting only a preload applying member and a high load absorbing part, which is viewed from the center axis AX direction. As illustrated in FIG. 17, a power transmission device 1K according to the eighth embodiment is different from the power transmission device 1 according to the first embodiment in that the power transmission device 1K includes a pair of annular members 65a and 65b in place of the preload applying members 40a and 40b.

The annular member 65a includes a cored bar 66 and rubber 67 vulcanization-bonded to the cored bar 66. The cored bar 66 includes an outer circumference engagement part 66a engaging with the outer peripheral surface of the outer ring 31a, an abutting part 66b abutting on an end face on the first direction side of the outer ring 31a, and an extending part 66c extending radially inward from the abutting part 66b. The outer circumference engagement part 66a is disposed in a recessed part 39 formed on the outer peripheral surface of the outer ring 31a. Due to this, the outer circumference engagement part 66a is positioned radially inward as compared with the outer peripheral surface of the outer ring 31a.

The rubber 67 includes an elastic body 67a for outer circumference sealing formed on an outer peripheral side of the outer circumference engagement part 66a, a high load absorbing part 67b formed on a side surface on the first direction side of the abutting part 66b, a preload applying member 67c projecting toward the first direction side from the high load absorbing part 67b, and an elastic body 67d for inner circumference sealing extending radially inward along the extending part 66c. The elastic body 67a for outer circumference sealing, the high load absorbing part 67b, the preload applying member 67c, and the elastic body 67d for inner circumference sealing are continuous to each other, and are integrally formed.

The elastic body 67a for outer circumference sealing is in slidably contact with the inner peripheral surface 103b of the second main body 103. Due to this, the grease hardly leaks out from between the second main body 103 and the outer ring 31a. Furthermore, vibration of the outer ring 31a in the radial direction is absorbed by the elastic body 67a for outer circumference sealing, and what is called a rattling sound is prevented from being caused. The elastic body 67d for inner circumference sealing is in slidably contact with the outer peripheral surface 13a of the nut 13. Thus, foreign substances are prevented from entering the first bearing 30a from the first direction side.

The high load absorbing part 67b and the preload applying member 67c are formed to have the same thickness in the center axis AX direction before assembly. A length in the radial direction of the high load absorbing part 67b is

**EP 4 056 866 A1**

L1. A length in the radial direction of the preload applying member 67c is L2. Thus, regarding the length in the radial direction, the high load absorbing part 67b is formed to be longer than the preload applying member 67c. That is, a cross-sectional area of the high load absorbing part 67b is larger than that of the preload applying member 67c in a case of cutting them along the center axis AX.

The high load absorbing part 67b and the preload applying member 67c are assembled between the stepped surface 103a of the second main body 103 and the outer ring 31a, and a compressive load is acting in the center axis AX direction. Due to this, the preload applying member 67c having a smaller cross-sectional area is deformed more largely than the high load absorbing part 67b. The preload applying member 67c presses the outer ring 31a, and applies a preload to the first bearing 30a. On the other hand, in a case in which a high load acts on the rack 88b in the center axis AX direction, the high load absorbing part 67b is deformed to absorb the load. As illustrated in FIG. 18, the high load absorbing part 67b is formed in a ring shape centered on the center axis AX. The preload applying member 67c is constituted of a plurality of projections 67e that are formed in a rectangular shape when viewed from the center axis AX direction.

As described above, the power transmission device 1K includes the cored bar 66 fixed to one of the outer rings 31a and 31b of the first bearing 30a and the second bearing 30b, and the elastic body 67d for inner circumference sealing supported by the cored bar 66 and closing the inner peripheral side of each of the outer rings 31a and 31b. The cored bar 66 includes the cylindrical-shaped outer circumference engagement part 66a engaging with the outer peripheral surface of each of the outer rings 31a and 31b, and the recessed part 39 is formed on the outer peripheral surface of each of the outer rings 31a and 31b, the recessed part 39 being recessed radially inward and housing the outer circumference engagement part 66a. Due to this, it is possible to prevent the outer circumference engagement part 66a from abutting on the housing 100 to hinder sliding of the outer ring 31a.

The power transmission device 1K includes the elastic body 67a for outer circumference sealing that closes a space between the outer peripheral surface of each of the outer rings 31a and 31b and each of the inner peripheral surfaces 101b and 103b of the housing 100, and the elastic body 67a for outer circumference sealing is fixed to the outer peripheral surface of the outer circumference engagement part 66a and in slidably contact with each of the inner peripheral surfaces 101b and 103b of the housing 100. The elastic body 67a for outer circumference sealing can prevent the grease from leaking out from between each of the outer rings 31a and 31b and the housing 100, and secure a sliding property of the outer rings 31a and 31b. Furthermore, vibration of the outer rings 31a and 31b in the radial direction is absorbed by the elastic body 67a for outer circumference sealing, and what is called a rattling sound is prevented from being caused. Additionally, when the cored bar 66 is assembled with each of the outer rings 31a and 31b, the elastic body 67a for outer circumference sealing is also assembled therewith, so that man-hours for assembling work are reduced.

The power transmission device 1K includes the high load absorbing part 67b made of rubber that is interposed between the preload applying member 67c and each of the outer rings 31a and 31b to absorb a high load in the center axis AX direction. The preload applying member 67c is made of rubber, and a cross-sectional area thereof cut along the center axis AX direction is smaller than that of the high load absorbing part 67B. The preload applying member 67c and the high load absorbing part 67b are supported by the cored bar 66. Due to this, in a case of assembling the high load absorbing part 67b with the preload applying member 67c, the preload applying member 67c is deformed to press the outer ring 31a, and preloads are applied to the first bearing 30a and the second bearing 30b. On the other hand, in a case in which a high load acts in the center axis AX direction, the high load absorbing part 67b absorbs the high load. Thus, the preload applying member 67c is prevented from being ruptured due to a high load acting thereon. Additionally, when the cored bar 66 is assembled with each of the outer rings 31a and 31b, the preload applying member 67c and the high load absorbing part 67b are also assembled with each other, so that man-hours for assembling work are reduced.

The preload applying member 67c of the power transmission device 1K includes the projections 67e that are disposed to be separated from each other in the circumferential direction. Due to this, the preload amount of the preload applying member 67c can be adjusted by changing the number of the projections 67e. The elastic body 67a for outer circumference sealing, the high load absorbing part 67b, the preload applying member 67c, and the elastic body 67d for inner circumference sealing are continuously and integrally formed by the rubber 67, but may be formed of another elastic body, or may be formed by combining a plurality of materials. For example, the preload applying member 67c may be formed of a material such as resin or a mixed material, or may be constituted of an elastic member such as a coned disc spring. Examples of the mixed material described above include a material obtained by mixing rubber and resin, and hardness of the material can be changed by adjusting a mixing ratio between the rubber and the resin. Furthermore, the high load absorbing part 67b can also be formed by a material different from that of the preload applying member 67c.

Reference Signs List

1, 1A, 1B, 1C, 1D, 1E, 1F, 1G, 1H, 1I, 1J,
1K POWER TRANSMISSION DEVICE
10, 10A BALL SCREW DEVICE
11 SCREW SHAFT
13 NUT
15 BALL
17 POSITIONING MEMBER
20 PULLEY DEVICE
21 DRIVING PULLEY
23 DRIVEN PULLEY
25 BELT
30a FIRST BEARING
30b SECOND BEARING
31a, 31b OUTER RING
33a, 33b INNER RING
35a, 35b ROLLING ELEMENT
36a, 36b GROOVE FOR GREASE
40a, 40b, 41a, 41b, 45, 67c PRELOAD APPLYING MEMBER
65a, 65b ANNULAR MEMBER
66 CORED BAR
67a ELASTIC BODY FOR OUTER CIRCUMFERENCE SEALING
67b HIGH LOAD ABSORBING PART
67d ELASTIC BODY FOR INNER CIRCUMFERENCE SEALING
80 ELECTRIC POWER STEERING DEVICE
100 HOUSING
101 FIRST MAIN BODY
103 SECOND MAIN BODY
105 THIRD MAIN BODY
AX CENTER AXIS
CN VIRTUAL LINE
CNa, CNb REFERENCE LINE
LC1, LC2, LC3, LC4 EXTENSION LINE AT CONTACT ANGLE

## Claims

1. A power transmission device comprising:

   a housing;
   a ball screw device including a nut housed in the housing, a screw shaft passing through the nut, and a plurality of balls disposed between the nut and the screw shaft;
   a pulley device including a driving pulley configured to be driven by receiving power transmitted from a power source, a driven pulley fixed to the nut, and a belt wound around outer peripheral surfaces of the driving pulley and the driven pulley;
   a first bearing and a second bearing disposed between the housing and the nut in a center axis direction parallel with a center axis of the nut; and
   a preload applying member configured to apply preloads to the first bearing and the second bearing, wherein the first bearing and the second bearing are respectively disposed on both sides of the driven pulley to be a face-to-face combination,
   each of the first bearing and the second bearing includes an outer ring engaged with the housing, and
   the outer ring is pressed toward the driven pulley by the preload applying member, and is separated from the driven pulley with a gap between the outer ring and the driven pulley.

2. The power transmission device according to claim 1, wherein

   a first intersection point at which an extension line at a contact angle of the first bearing intersects with the center axis of the nut agrees with, on the center axis of the nut, a second intersection point at which an extension line at a contact angle of the second bearing intersects with the center axis of the nut, and

a virtual line orthogonal to the center axis of the nut and passing through a center in the center axis direction of the outer peripheral surface of the driven pulley passes through both of the first intersection point and the second intersection point.

3. The power transmission device according to claim 1 or 2, wherein two inner ring raceway surfaces are formed on the outer peripheral surface of the nut, the inner ring raceway surfaces subjected to hardening treatment on which rolling elements roll.

4. The power transmission device according to claim 1 or 2, wherein

a groove part that is recessed radially inward is formed on the outer peripheral surface of the nut,
the driven pulley is made of resin and integrated with the nut by insert molding, and
part of the driven pulley enters the groove part.

5. The power transmission device according to any one of claims 1 to 4, wherein an elastic member is interposed between the outer peripheral surface of the outer ring and the housing.

6. The power transmission device according to any one of claims 1 to 5, wherein

a recessed part is formed on a side surface of the driven pulley opposed to an end face of the outer ring,
an extending part extending toward the inside of the recessed part is formed on the outer ring,
an end part of the extending part enters the recessed part, and
a labyrinth structure is made by a minute gap between the end part of the extending part and the recessed part.

7. The power transmission device according to any one of claims 1 to 6, comprising:

a shielding member that is fixed to the outer ring, extends toward a side surface of the driven pulley, and closes a gap between the outer ring and the driven pulley, wherein
a recessed part is formed on a side surface of the driven pulley opposed to an end face of the outer ring,
an end part of the shielding member enters the recessed part, and
a labyrinth structure is made by a minute gap between the end part of the shielding member and the recessed part.

8. The power transmission device according to claim 6 or 7, wherein grease is filled in the recessed part.

9. The power transmission device according to any one of claims 1 to 8, wherein a first sealing member is disposed at an end part of the outer ring facing the preload applying member, the first sealing member being in slidably contact with the outer peripheral surface of the nut.

10. The power transmission device according to claim 9, wherein

the first sealing member comprises:

a cored bar fixed to an end part of the outer ring; and
an elastic body for inner circumference sealing supported by the cored bar,

the cored bar includes a cylindrical outer circumference engagement part configured to engage with the outer peripheral surface of the outer ring, and
a recessed part is formed on the outer peripheral surface of the outer ring, the recessed part being recessed radially inward and housing the outer circumference engagement part.

11. The power transmission device according to claim 10, comprising:

an elastic body for outer circumference sealing configured to close a space between the outer peripheral surface of the outer ring and an inner peripheral surface of the housing, wherein
the elastic body for outer circumference sealing is fixed to an outer peripheral surface of the outer circumference engagement part and in slidably contact with the inner peripheral surface of the housing.

12. The power transmission device according to claim 10 or 11, comprising:

a high load absorbing part interposed between the preload applying member and the outer ring to absorb a high load in the center axis direction, wherein

a cross-sectional area of the preload applying member cut along the center axis direction is smaller than a cross-sectional area of the high load absorbing part, and

the preload applying member and the high load absorbing part are supported by the cored bar.

13. The power transmission device according to any one of claims 1 to 12, wherein a second sealing member being in slidably contact with the outer peripheral surface of the nut is disposed on an end part of an outer ring of the first bearing or the second bearing facing the driven pulley.

# FIG.1

# FIG.2

# FIG.3

# FIG.4

# FIG.5

EP 4 056 866 A1

# FIG.6

# FIG.7

# FIG.8

1C

25  23A  17  10A
13b

30a

30b

13A

13a

11

AX

# FIG.9

# FIG.10

# FIG.11

# FIG.12

# FIG.13

# FIG.14

# FIG.15

# FIG.16

# FIG.17

# FIG.18

## 0I000INTERNATIONAL SEARCH REPORT

| International application No. |
|---|
| PCT/JP2020/039785 |

**A. CLASSIFICATION OF SUBJECT MATTER**
Int.Cl. F16C27/06(2006.01)i, F16H25/20(2006.01)i, F16H25/22(2006.01)i, F16H25/24(2006.01)i, F16H37/12(2006.01)i, B62D5/04(2006.01)i, F16H55/36(2006.01)i, F16H55/48(2006.01)i
FI: F16H25/24G, F16H25/20E, F16H25/22Z, F16H37/12Z, F16H25/24B, F16H25/24L, F16H55/36A, F16H55/48, F16C27/06B, B62D5/04
According to International Patent Classification (IPC) or to both national classification and IPC

**B. FIELDS SEARCHED**

Minimum documentation searched (classification system followed by classification symbols)
Int.Cl. F16C27/06, F16H25/20, F16H25/22, F16H25/24, F16H37/12, B62D5/04, F16H55/36, F16H55/48

Documentation searched other than minimum documentation to the extent that such documents are included in the fields searched
Published examined utility model applications of Japan      1922–1996
Published unexamined utility model applications of Japan    1971–2020
Registered utility model specifications of Japan            1996–2020
Published registered utility model applications of Japan    1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2019-104326 A (JTEKT CORPORATION) 27 June 2019 (2019-06-27), paragraphs [0043]-[0047], fig. 5, 6 | 1-3<br>4-5<br>6-13 |
| Y | JP 2008-105649 A (JTEKT CORPORATION) 08 May 2008 (2008-05-08), paragraphs [0031], [0041]-[0046], fig. 8-14 | 4-5 |
| Y | JP 2015-86945 A (JTEKT CORPORATION) 07 May 2015 (2015-05-07), fig. 2 | 5 |
| A | JP 62-85763 A (HONDA MOTOR CO., LTD.) 20 April 1987 (1987-04-20) | 1-13 |
| A | US 2019/0263443 A1 (THYSSENKRUPP PRESTA AG) 29 August 2019 (2019-08-29) | 1-13 |
| A | US 2017/0096165 A1 (MANDO CORPORATION) 06 April 2017 (2017-04-06) | 1-13 |

☐ Further documents are listed in the continuation of Box C.      ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 November 2020 | 17 November 2020 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

INTERNATIONAL SEARCH REPORT

Information on patent family members

International application No.

PCT/JP2020/039785

| | | | |
|---|---|---|---|
| JP 2019-104326 A | 27 June 2019 | (Family: none) | |
| JP 2008-105649 A | 08 May 2008 | US 2010/0051378 A1<br>paragraphs [0064], [0093]-[0105],<br>fig. 12-18<br>WO 2008/050862 A1<br>EP 2080686 A1 | |
| JP 2015-86945 A | 07 May 2015 | (Family: none) | |
| JP 62-85763 A | 20 April 1987 | (Family: none) | |
| US 2019/0263443 A1 | 29 August 2019 | WO 2017/220715 A1<br>DE 102016007541 A1<br>CN 109311507 A | |
| US 2017/0096165 A1 | 06 April 2017 | DE 102016011891 A1<br>KR 10-2017-0040493 A<br>CN 107031706 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018070117 A